# EUROPÄISCHE PATENTSCHRIFT

(11) **EP 0 433 550 B1**
(45) Veröffentlichungstag und Bekanntmachung des Hinweises auf die Patenterteilung: **08.06.1994**
(21) Anmeldenummer: 90115728.9
(22) Anmeldetag: 16.08.1990
(51) Int. Cl.: H01H 50/54

(54) **Elektrische Schaltvorrichtung**
Electric switch device
Dispositif de commutation électrique

(30) Priorität: 22.12.1989 DE 8915090 U
(43) Veröffentlichungstag der Anmeldung: 26.06.1991
(73) Patentinhaber: Schaltbau Aktiengesellschaft, D-81677 München (DE)
(72) Erfinder: Kralik, Robert, D-8011 Poing (DE)
(74) Vertreter: Grünecker, Kinkeldey, Stockmair & Schwanhäusser Anwaltssozietät

(56) Entgegenhaltungen:
- FR-A- 2 598 027
- GB-A- 2 179 497
- US-A- 3 536 868

## Beschreibung

Die Erfindung bezieht sich auf eine elektrische Schaltvorrichtung mit zwei Schützen, die jeweils mindestens vier feststehende Kontaktelemente und dazugehörige, bewegliche Kontaktbrücken sowie Anschlußkontakte aufweisen, wobei die feststehenden Kontaktelemente der beiden Schütze paarweise mittels elektrisch leitenden Verbindungen miteinander verbunden sind, wobei die feststehenden Kontaktelemente in einem Gehäuse angeordnet sind.

Derartige elektrische Schaltvorrichtungen sind aus der Praxis bekannt. Sie werden unter anderem als sogenannte Wendeschaltungen für den Betrieb von Gabelstaplern eingesetzt, um die den Gabelstapler antreibende Gleichstrommaschine in der Drehrichtung umzukehren. Für diese Schaltvorrichtung sind zwei separate, sogenannte Doppelschütze vorgesehen worden. Die feststehenden Kontaktelemente bei solchen Doppelschützen weisen in der Regel einen damit einstückig verbundenen Gewindebolzen aus Kupfer auf, an welchen Anschlußverbindungen angeschlossen werden können. zur Verwirklichung der elektrischen Schaltvorrichtung ist es nötig gewesen, jeweils die Kontakte der beiden getrennten Doppelschütze durch elektrische Leitungen miteinander zu verbinden. Abgesehen von der relativ großen Baugröße einer solchen Schaltvorrichtung kommt es auch bei Übelastungen zu einer hohen thermischen Erwärmung.

Aus der US-A 35 36 868 und aus der GB-A 21 79 497 ist es bereits im Zusammenhang mit elektrischen Schaltvorrichtungen bekannt, feststehende Kontakte über Stromschienen miteinander zu verbinden, so daß das Anschrauben von Stromleitungen an die Festkontakte entfallen kann. Allerdings handelt es sich bei den bekannten Schaltvorrichtungen nicht um solche mit zwei Schützen.

Der Erfindung liegt die Aufgabe zugrunde, bei einer elektrischen Schaltvorrichtung der eingangs genannten Art die Baugröße zu verringern und gleichzeitig ihr thermisches Verhalten zu verbessern.

Diese Aufgabe wird erfindungsgemäß dadurch gelöst, daß die elektrisch leitenden Verbindungen jeweils einstückig mit den beiden zugehörigen feststehenden Kontaktelementen als, zumindest im Bereich der Kontaktelemente im Querschnitt U-förmige, Stromschienen ausgebildet sind, wobei die feststehenden Kontaktelemente jeweils an unteren U-Schenkeln angeordnet sind, während die oberen U-Schenkel die elektrisch leitende Verbindung der paarweise miteinander verbundenen Kontaktelemente darstellt, und daß das Gehäuse in einer parallel zur Längserstreckung der Stromschienen liegenden Teilungsebene in zwei Gehäusehälften teilbar ist, wobei die Stromschienen von der Teilungsebene her in die Gehäusehälften einsteckbar angeordnet sind, so daß im eingebauten Zustand sich die Querstege der im Querschnitt U-förmigen Stromschienen der beiden Gehäusehälften gegenüberliegen.

Durch die Ausbildung der elektrischen Verbindungen als Stromschiene wird nicht nur die Anzahl der elektrischen Übergänge vermindert; es wird vielmehr auch der thermische Übergang zwischen den feststehenden Kontaktelmenten und den elektrisch leitenden Verbindungen wesentlich verbessert, so daß thermische Spitzen an den feststehenden Kontaktelementen wesentlich schneller über die Stromschienen abgebaut werden können. Somit ist die erfindungsgemäße elektrische Schaltvorrichtung, obgleich sie auch kompakter baut, um einiges leistungsfähiger als die herkömmliche Anordnung von zwei getrennten Doppelschützen. Durch die U-förmige Ausbildung der Stromschienen kann der untere U-Schenkel, welcher die feststehenden Kontaktelemente trägt, innerhalb des Gehäuses angeordnet sein, während der obere U-Schenkel der Stromschiene außerhalb des Gehäuses liegen kann, was nicht nur günstig für die Anordnung der Anschlußkontakte ist, sondern auch für den Wärmeabtransport günstig ist, da die Stromschiene wie ein Kühlblech wirkt.

In bevorzugter Weise sind in jeder Gehäusehälfte drei Trennwände zur Bildung von insgesamt vier Schaltkammern mit einem vorbestimmten Abstand zueinander angeordnet, wobei jeder Schaltkammer ein feststehendes Kontaktelement zugeordnet ist. Derartige Schaltkammern sind an sich bekannt, um die Funkenbildung bei Kontaktöffnung lokal zu beschränken.

Zur Verwirklichung einer eingangs erwähnten Wendeschaltung ist es günstig, wenn in einer ersten Gehäusehälfte eine erste Stromschiene die beiden äußeren Schaltkammern und eine zweite Stromschiene die beiden inneren Schaltkammern miteinander verbindet, während in der zweiten Gehäusehälfte die dritte und die vierte Stromschiene jeweils eine äußere und eine innere Schaltkammer miteinander verbindet.

Günstig ist auch, wenn im zusammengesetzten Zustand des Gehäuses ein Trennsteg zwischen den Stromschienen der beiden Gehäusehälften anbringbar ist. Somit können die Stromschienen der beiden benachbarten Gehäusehälften relativ nah aneinanderliegen, ohne daß Gefahr besteht, daß die Stromschiene entgegen Ihrer Einsteckrichtung auswandern und sich berühren können. Eine besonders vorteilhafte Art der Befestigung des Gehäuses läßt sich erreichen, wenn an beiden Enden des Trennsteges jeweils ein Quersteg ausgebildet ist, dessen Enden mit den Gehäusehälften formschlüssig verbindbar sind. Der somit in Form eines doppelten T's ausgebildete Trennsteg wird damit zum einzigen Teil, welches verschraubt werden muß, um das Gehäuse zusammenzusetzen. Damit ist eine einfache Demontage des Gehäuses gewährleistet.

Besonders vorteilhaft ist, wenn sich bei jeder Stromschiene der obere U-Schenkel über die gesamte Länge der Stromschiene erstreckt. Durch diese Art der Ausbildung der Stromschiene wird die an den feststehenden Kontaktelementen erzeugte Wärme besonders gut abgeführt, da die Stromschiene mit einer verhältnismäßig großen Oberfläche außerhalb des Gehäuses und damit im Bereich der kühleren Umgebungsluft liegt.

Wenn bei jeder Stromschiene im unteren U-Schenkel zwischen den beiden, feststehenden Kontaktelementen eine Ausnehmung ausgebildet ist, lassen sich die Stromschienen verschachtelt in die Gehäusehälften einstecken, was bedeutet, daß der obere U-Schenkel der einen Stromschiene oberhalb des oberen U-Schenkels der anderen Stromschiene liegt, während der untere U-Schenkel zwischen dem oberen und dem unteren U-Schenkel der anderen Stromschiene zu liegen kommt.

Es ist günstig, wenn bei den beiden, in die jeweilige Gehäusehälfte eingesteckten Stromschienen die Verbindungsstege zwischen dem oberen und dem unteren U-Schenkel zur Teilungsebene weisen. So lassen sich die Stromschienen in die Gehäusehälften einstecken, wobei zwischen dem oberen und dem unteren Schenkel Abstützstege im Gehäuse ausgebildet sein können, so daß die Stromschienen formschlüssig im Gehäuse gehalten werden.

Eine besonders platzsparende Anornung der Stromschienen im Gehäuse ergibt sich, wenn der Abstand zwischen dem oberen und dem unteren U-Schenkel an den jweiligen Enden der dritten und vierten Stromschiene gleich ist, während der Abstand zwischen dem oberen und dem unteren U-Schenkel an einem Ende der ersten und zweiten Stromschiene größer ist, als an dem anderen Ende der jeweiligen Stromschiene. Zwar wird hierdurch eine stufenförmige Anordnung der feststehenden Kontaktelemente hervorgerufen, was auch eine versetzte Anordnung der Kontaktbrücken erfordert, die Bauhöhe der Schaltvorrichtung läßt sich dadurch jedoch insgesamt verringern.

Wenn an den im oberen U-Schenkel der Stromschienen vorgesehenen Anschlußkontakten eine Bohrung zur Befestigung eines Kabelschuhs angeordnet ist, hat dies den Vorteil, daß der Kabelschuh flach an die Oberfläche des oberen U-Schenkels einer Stromschiene angeschraubt werden kann. Hierdurch ergibt sich eine große Übergangsfläche zwischen der Stromschiene und dem Kabelschuh, was neben einem guten Stromübergang auch den Wärmeabbau weiter begünstigt.

In diesem Zusammenhang ist es günstig, wenn jeweils unterhalb der Bohrung des jeweiligen Anschlußkontaktes im Gehäuse eine Ausnehmung ausgebildet ist, in welche der Kopf einer Anschlüßschraube einschiebbar und gegen Verdrehen gesichert ist.

Besonders einfach lassen sich die Stromschienen als Stanz-Biegeteile herstellen.

Um lediglich zwei Antriebe für die Schaltvorrichtung zu benötigen, ist es günstig, wenn die vier beweglichen Kontaktbrücken jeweils paarweise auf zwei nebeneinander angeordneten Kontaktträgern angeordnet sind, die im Gehäuse parallel zu den Trennwänden der Schaltkammern verschiebbar gelagert sind.

In diesem Zusammenhang ist es besonders günstig, wenn zwischen den beiden Kontaktträgern eine am Gehäuse schwenkbar gelagerte Verriegelungswippe angeordnet ist, die mit ihren Enden jeweils in eine Ausnehmung der beiden Kontaktträger eingreift. Auf diese Weise wird bewirkt, daß stets nur ein Kontaktträger die Kontaktbrücken im Schaltzustand halten kann. Sobald der andere Kontaktträger in den Schaltzustand bewegt wird, werden die anderen Kontakte zwangsweise geöffnet. Diese mechanische Zwangsöffnung ist besonders sicher gegen Fehlbetätigungen und ist auch in der Lage festgeschweißte Kontakte zu öffnen.

Im folgenden wird ein Ausführungsbeispiel der Erfindung anhand von Zeichnungen näher erläutert. Es zeigen:
- **Fig. 1**: eine teilweise geschnittene Ansicht einer erfindungsgemäßen Schaltvorrichtung,
- **Fig. 2**: eine Draufsicht auf die Schaltvorrichtung aus Fig. 1,
- **Fig. 3**: eine Gehäusehälfte der Schaltvorrichtung aus Fig. 1, gesehen in Richtung der Pfeile III-III aus Fig. 2 und
- **Fig. 4**: einen Querschnitt durch die im Gehäuse eingebauten Stromschienen entlang der Linie IV-IV aus Fig. 2.

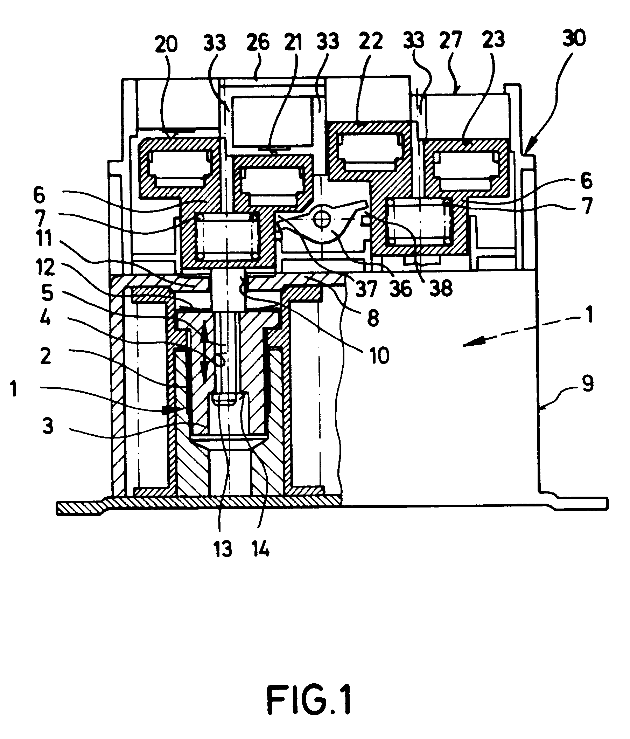

In Fig. 1 ist die elektrische Schaltvorrichtung insgesamt dargestellt. Sie umfaßt zwei Antriebe 1, von denen lediglich der linke Antrieb sichtbar ist. Der Antrieb besteht aus einer Spule 2, innerhalb derer ein ferromagnetischer Anker in Richtung des Doppelpfeiles höhenbeweglich angeordnet ist. Der Anker 3 ist von einer Zentralbohrung 4 durchsetzt, durch selche sich der vertikale Stift 5 eines Kontaktträgers 6 hindurcherstreckt. Der Kontaktträger 6 ist über eine Feder 7 entgegen der nach oben gerichteten Schließrichtung federbelastet. Das bedeutet, daß bei der Schließbewegung des Kontaktträgers die Kraft der Feder 7 durch den Antrieb 1 überwunden werden muß. Der Antrieb 1 ist durch eine Antriebsgehäuseplatte 8 von dem oberen, die Kontaktträger 6 aufnehmenden Gehäuse 9 getrennt. Damit sich der Stift 5 des Kontaktträgers in die Zentralbohrung 4 des Ankers 3 erstrecken kann, ist die Gehäuseplatte 8 mit einer fluchtenden Öffnung 10 versehen. Die Gehäuseplatte 8 ist als ein Stanz-Biegeteil ausgebildet und ist in einem Bereich konzentrisch um die Öffnung 10 nach unten tiefgezogen, wobei der Durchmesser des tiefgezogenen Bereichs 11 etwa dem Durchmesser des Ankers entspricht. Hierdurch wird das bei üblichen Schützen in die Gehäuseplatte eingesetzte Drehteil, welches den Anker von der Gehäsueplatte beabstandet hält, vermieden. Im Bereich zwischen dem tiefgezogenen Bereich 11 und der Oberseite des Ankers 3 ist eine Federlamellenscheibe 12 angeordnet, die aus einem antimagnetischen Werkstoff, wie z. B. Messing besteht und verhindert, daß der Anker beim Schließen des Kontaktträgers an die Gehäuseplatte 8 "kleben" bleibt.

Ferner ist zu erkennen, daß der Stift 5 des Kontaktträgers 6 an seinem unteren Ende einen hakenförmigen Absatz 13 aufweist, der die Zentralbohrung 4 in einer eine Schulter 14 bildenden Ausnehmung hintergreift. Dadurch wird der Kontaktträger auch bei einer Öffnungsbewegung des Ankers 3 nach unten mitgenommen. Die hierbei freiwerdende kinetische Energie wird somit auf den Kontaktträger 6 übertragen, wodurch bei kleineren Kontaktverschweißungen ein sicheres Öffnen der Kontakte noch möglich ist. Die zur Verfügung stehende kinetische Energie resultiert daraus, daß der Anker den Kontaktträger weiter anhebt, als zur Schließung der Kontakte erforderlich ist. Hierbei handelt es sich um den bei Schützen allgemein bekannten Nachhub, der sicherstellen soll, daß die Kontakte im Schließzustand voll anliegen. Beim Öffnen der Kontakte wird die durch den Nachhub in den Federn gespeicherte Energie freigegeben und beschleunigt den Anker 3. Diese, in dem Anker 3 gespeicherte kinetische Energie wirkt beim Öffnen der Kontakte zusätzlich zu der Kraft der Feder 7.

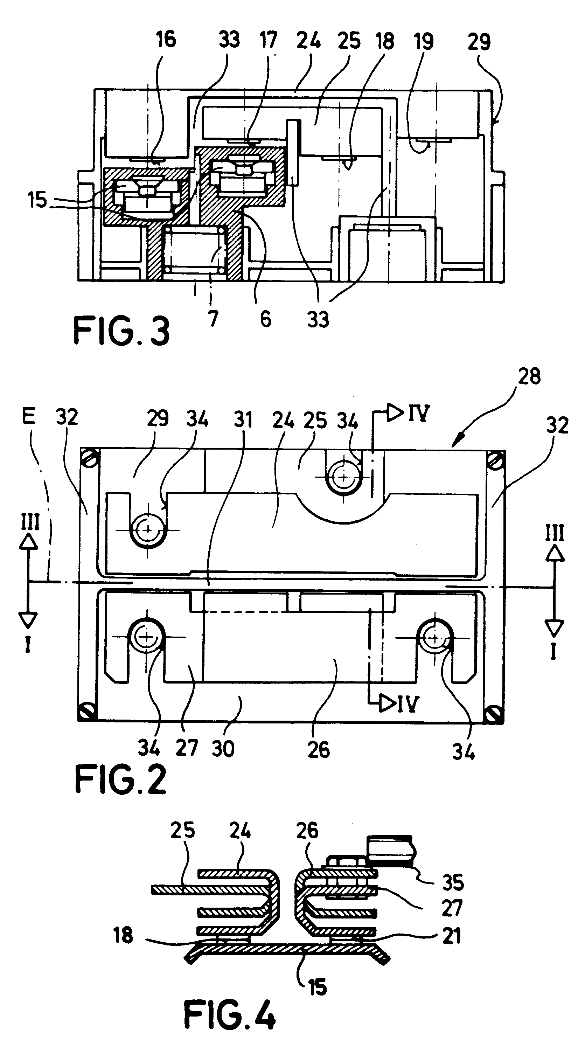

Aus Fig. 1 ist gut zu erkennen, daß die elektrische Schaltvorrichtung aus zwei Doppelschützen besteht, d.h. aus zwei der obenbeschriebenen Antriebe 2, welche jeweils mit einem Kontaktträger 6 bzw. 7 bestückt sind, die wiederum jeweils zwei Kontaktbrücken 15 tragen, welche lediglich in Fig. 3 dargestellt sind und mittels nicht dargestellter Federn nachgebend in den Kontaktträgern 6 gelagert sind.

Oberhalb der in den Kontaktträgern 6 gelagerten Kontaktbrücken 15 sind feststehende Kontaktelemente 16 bis 23 vorgesehen, die mit den Kontakten der Kontaktbrücken 15 korrespondieren. Die feststehenden Kontaktelemente der beiden Schütze sind jeweils paarweise miteinander verbunden, wie sich aus den Fig. 1 und 3 ergibt, und zwar derart, daß auf der einen Kontaktseite die jeweils äußeren feststehenden Kontaktelemente 16 und 19 sowie die inneren feststehenden Kontaktelemente 17 und 18 miteinander verbunden sind, während auf der anderen Kontaktseite jeweils ein äußerer feststehender Kontakt 20 bzw. 23 mit dem jeweils inneren feststehenden Kontaktelement 22 bzw. 21 des jeweils anderen Schützes verbunden ist. Wie besonders gut aus Fig. 1 ersichtlich ist, sind die elektrisch leitenden Verbindungen der obenbeschriebenen feststehenden Kontaktelemente jeweils einstückig mit diesen als Stromschienen 24, 25, 26 und 27 ausgebildet, die allesamt zusammen mit den die Kontaktbrücken tragenden Kontaktträger 6 in einem gemeinsamen, beide Schütze übergreifenden Gehäuse 28 angeordnet sind.

Wie besonders gut aus Fig. 2 ersichtlich ist, ist das Gehäuse 28 in einer parallel zur Längserstreckung der Stromschienen 24 bis 27 liegenden Teilungsebene E in zwei Gehäusehälften 29 und 30 teilbar. Fig. 1 zeigt eine Ansicht auf die Gehäusehälfte 30 von der Teilungsebene E aus gesehen, während Fig. 3 eine Ansicht auf die Gehäusehälfte 29 zeigt.

Aus Fig. 2 ist ferner gut erkennbar, daß zwischen den Stromschinen 24, 25 der ersten Kontaktseite und den Stromschienen 26 und 27 der anderen Kontaktseite ein Trennsteg 31 angeordnet ist, an dessen beiden Enden jeweils ein Quersteg 32 ausgebildet ist, dessen Enden wiederum mit den Gehäusehälften 29 und 30 formschlüssig verbindbar sind, indem die Enden der Querstege 32 über nicht dargestellte Schrauben in die Gehäuseplatte 8 der Schaltvortichtung eingeschraubt werden. Somit wird das Gehäuse 28 ausschließlich über den Trennsteg 31 mit den beiden Querstegen 32 zusammengehalten.

Die Ansicht in die Gehäusehälften 29 und 30 zeigt, daß dort jeweils drei Trennwände 33 zur Bildung von Schaltkammern ausgebildet sind, in denen jeweils ein feststehendes Kontaktelement angeordnet ist, wobei sich jeweils zwei Schaltkammern der beiden Kontaktseiten gegenüberliegen.

Wie besonders gut aus Fig. 4 erkennbar ist, weisen die Stromschienen 24 bis 27 wenigstens an ihren beiden Enden einen U-förmigen Querschnitt auf, wobei die feststehenden Kontaktelemente 16 bis 23 jeweils an den unteren U-Schenkeln angeordnet sind. Die Stromschinen 24 bis 27 sind von der Teilungsebene E in die Gehäusehälften 29 bzw. 30 eingesteckt, und zwar derart, daß die an den unteren U-Schenkeln ausgebildeten feststehenden Kontaktelemente innerhalb des Gehäuses liegen, während die oberen U-Schenkel außerhalb des Gehäuses liegen, wie aus der Draufsicht aus Fig. 2 hervorgeht. Bei dem hier beschriebenen Ausführungsbeispiel erstreckt sich der obere U-Schenkel der Stromschienen 24 bis 27 über deren gesamte Länge, während im unteren U-Schenkel zwischen den jeweils am Ende ausgebildeten Kontaktelementen eine Ausnehmung ausgebildet ist, in welche im Falle der Stromschienen 26 und 27 das jeweils eingeschlossene Kontaktelement 21 bzw. 22 hindurchgreift. Die Ausnehmung der großen Stromschiene 24 dient dazu, daß die kleineStromschiene 25 zwischen den beiden feststehenden Kontaktelementen 16 und 19 ausreichend Platz hat. Auf diese Weise ist die in den Fig. 1 und 3 gezeigte, besonders platzsparende Anordnung der Stromschienen 24 bis 27 möglich.

Wie aus den Fig. 2 und 4 hervorgeht, weist der obere U-Schenkel Anschlußkontakte auf, die durch zum Rand der Stromschienen 24 bis 27 hin offene Bohrungen 34 gebildet sind. In diese Bohrungen können Schraubbolzen eingeschoben werden, mit denen die Kabelschuhe 35 von Anschlußleitungen flächenbündig an die jeweilige Stromschiene angebracht werden können.

Die Abstände zwischen den unteren U-Schenkeln und den obren U-Schenkeln sind bei der langen Stromschiene 24 und der kurzen Stromschiene 25 unterschiedlich gewählt, um bei durchgehendem oberen U-Schenkel die an den unteren U-Schenkeln ausgebildeten feststehenden Kontaktelemente 16 bis 19 dem Niveau der feststehenden Kontaktelemente 20 bis 23 der Stromschienen 26 und 27 anzupassen. Die Schenkelabstände bei den Stromschienen 26 und 27 können daher jeweils denselben Abstand aufweisen. Daraus ergibt sich eine stufenartige Anordnung der Kontaktbrücken 15 auf den Kontaktträgern 6 und insgesamt eine geringere Bauhöhe der Schaltvorrichtung. Die Stromschienen sind zweckmäßigerweise als Stanzbiegeteile aus Kupfer hergestellt.

Wie noch aus Fig. 1 hervorgeht, ist in der Gehäusehälfte 30 eine Verriegelungswippe 36 gelagert, die mit ihren beiden Enden in entsprechende Ausnehmungen 37 bzw. 38 an den Kontaktträgern 6 eingreift. Diese Verriegelungswippe bewirkt, daß jeweils nur einer der Kontaktträger die Kontaktbrücken 15 in Schaltstellung bringen kann. Wenn z.B., wie in Fig. 1 dargestellt, der rechte Kontaktträger 6 sich in Schaltstellung befindet, wird der linke Kontaktträger 6 durch die Verriegelungswippe 36 unten gehalten. Zwar gibt es auch elektrische Verriegelungssysteme, die das gleichzeitige Schließen beider Kontaktträger 6 verhindern sollen, diese sind in ihrer Entwicklung jedoch verhältnismäßig aufwendig, wenn auch verhindert werden soll, daß bei Kontaktverschweißung des einen Schützes der andere Schütz noch schließen kann. Mit dieser Verriegelungswippe 36 läßt sich bei einer Kontaktverschweißung bei den rechten beiden Kontakten der linke Kontaktträger 6 nur dann in Schaltstellung nach oben verschieben, wenn die Kontaktverschweißung über die Verriegelungswippe 36 gelöst wird, da anderenfalls die Wippe eine Bewegung des linken Kontaktträgers in Schaltstellung nicht zulassen würde.

Die Vorteile der obenbeschriebenen Schaltvorrichtung liegen insbesondere darin, daß die Schaltvorrichtung relativ klein baut, und daß die Wärme wesentlich besser abgeführt wird, was neben der einstückigen Verbindung der feststehenden Kontaktelemente nicht zuletzt darauf zurückzuführen ist, daß die Stromschienen mit einem Großteil ihrer Oberfläche außerhalb des Gehäuses liegen und dort der umgebenden Atmosphäre eine große Angriffsfläche zur Wärmeabgabe bieten. Durch die Verbindung des Ankers 3 mit dem jeweiligen Kontaktträger 6 ergibt sich fernerhin eine Anhebung der Schweißstromgrenze, da zum Lösen der Kontakte eine größere Energie zur Verfügung steht.

## Patentansprüche

1. Elektrische Schaltvorrichtung mit zwei Schützen, die jeweils mindestens vier feststehende Kontaktelemente (16-19; 20-23) und dazugehörige bewegliche Kontaktbrücken (15) sowie Anschlußkontakte (34) aufweisen, wobei die feststehenden Kontaktelemente (16-23) der beiden Schütze paarweise mittels elektrisch leitender Verbindungen miteinander verbunden sind, wobei die feststehenden Kontaktelemente in einem Gehäuse (28) angeordnet sind, **dadurch gekennzeichnet,** daß die elektrisch leitenden Verbindungen jeweils einstückig mit den beiden zugehörigen feststehenden Kontaktelementen (16, 19; 17, 18; 20, 22; 21, 23) als, zumindest im Bereich der Kontaktelemente im Querschnitt U-förmige, Stromschienen (24-27) ausgebildet sind, wobei die feststehenden Kontaktelemente jeweils an unteren U-Schenkeln angeordnet sind, während der obere U-Schenkel die elektrisch leitende Verbindung der paarweise miteinander verbundenen Kontaktelemente darstellt, und daß das Gehäuse (28) in einer parallel zur Längserstreckung der Stromschienen (24-27) liegenden Teilungsebene (E) in zwei Gehäusehälften (29, 30) teilbar ist, wobei die Stromschienen von der Teilungsebene her in die Gehäusehälften einsteckbar angeordnet sind, so daß im eingebauten Zustand sich die beiden Gehäusehälften gegenüberliegen.

2. Schaltvorrichtung nach Anspruch 1, **dadurch gekennzeichnet,** daß alle feststehenden Kontaktelemente (16-23) der Stromschienen (24-27) mit den beweglichen Kontaktbrücken (15) in einem gemeinsamen Gehäuse (28) angeordnet sind.

3. Schaltvorrichtung nach Anspruch 1 oder 2, **dadurch gekennzeichnet,** daß in jeder Gehäusehälfte (29; 30) drei Trennwände (33) zur Bildung von vier Schaltkammern mit einem vorbestimmten Abstand zueinander angeordnet sind, wobei jeder Schaltkammer eines der feststehenden Kontaktelemente (16-23) zugeordnet ist.

4. Schaltvorrichtung nach einem der Ansprüche 1 bis 3, **dadurch gekennzeichnet,** daß in einer ersten Gehäusehälfte (29) eine erste Stromschiene (24) die beiden äußeren Schaltkammern und eine zweite Stromschiene (25) die beiden inneren Schaltkammern miteinander verbindet, während in der zweiten Gehäusehälfte (30) die dritte und vierte Stromschiene (25, 26) jeweils eine äußere und eine innere Schaltkammer miteinander verbindet.

5. Schaltvorrichtung nach einem der Ansprüche 1 bis 4, **dadurch gekennzeichnet,** daß am zusammengesetzten Gehäuse (28) ein Trennsteg (31) zwischen den Stromschienen (24, 25; 26,27 der beiden Gehäusehälften (29, 30) anbringbar ist.

6. Schaltvorrichtung nach Anspruch 5, **dadurch gekennzeichnet,** daß an beiden Enden des Trennsteges (31) jeweils ein Quersteg (32) ausgebildet ist, dessen Enden mit den Gehäusehälften (29, 30) formschlüssig verbindbar sind.

7. Schaltvorrichtung nach einem der Ansprücche 1 bis 6, **dadurch gekennzeichnet,** daß an jeder Stromschiene (24-27) jeweils zwei feststehende Kontaktelemente (16-23) vorgesehen sind, wobei die Kontaktelemente jeweils an den Enden der Stromschienen angeordnet sind.

8. Schaltvorrichtung nach einem der Ansprüche 1 bis 7,dadurch **gekennzeichnet,** daß sich bei jeder Stromschiene der obere U-Schenkel über die gesamte Länge der Stromschiene (24; 25; 26; 27) erstreckt.

9. Schaltvorrichtung nach einem der Ansprüche 1 bis 8, **dadurch gekennzeichnet**, daß bei den Stromschienen (24, 26, 27) im unteren U-Schenkel zwischen den beiden feststehenden Kontaktelementen (16, 19; 20, 22; 21, 23) eine Ausnehmung ausgebildet ist.

10. Schaltvorricchtung nach einem der Ansprüche 1 bis 9, **dadurch gekennzeichnet,**, daß der Abstand zwischen dem oberen und dem unteren U-Schenkel an den jeweiligen Enden der dritten und vierten Stromschiene (26, 27) gleich ist, und daß der Abstand zwischen dem oberen und dem unteren U-Schenkel an einem Ende der ersten und zweiten Stomschiene (24, 25) größer ist als an deren jeweiligem anderen Ende.

11. Schaltvorrichtung nach einem der Ansprüche 1 bis 10, **dadurch gekennzeichnet,** daß am oberen Schenkel einer jeden Stromschiene (24-27) eine Bohrung (34) für den Anschlußkontakt angeordnet ist.

12. Schaltvorrichtung nach Anspruch 11, **dadurch gekennzeichnet,** daß die Bohrung (34) durch eine Ausnehmung im oberen Schenkel mit dem Rand der Stromschiene (24-27) verbunden ist.

13. Schaltvorrichtung nach einem der Ansprüche 1 bis 12, **dadurch gekennzeichnet,** daß der obere U-Schenkel der kürzeren, zweiten Stromschiene (25) in Richtung quer zur Stromschienenlängsachse eine größere Schenkellänge aufweist als der obere U-Schenkel der längeren, ersten Stromschiene (24).

14. Schaltvorrichtung nach einem der Ansprüche 11 bis 13, **dadurch gekennzeichnet,** daß unterhalb der Bohrung (34) des jeweiligen Anschlußkontaktes im Gehäuse eine Ausnehmung ausgebildet ist, in die eine Anschlußschraube für die Befestigung eines Kabelschuhs einschiebbar und gegen Verdrehen gesichert ist.

15. Schaltvorrichtung nach einem der Ansprüche 1 bis 14, **dadurch gekennzeichnet,** daß die Stromschiene als Stanz-Biegeteil ausgebildet ist.

16. Schaltvorrichtung nach einem der Ansprüche 1 bis 15, **dadurch gekennzeichnet,** daß die Kontaktbrücken (15) jeweils paarweise auf zwei nebeneinander angeordneten Kontaktträgern (6) im Gehäuse entlang der Richtung der Trennwände (33) verschiebbar angeordnet sind.

17. Schaltvortichtung nach Anspruch 16, **dadurch gekennzeichnet,** daß zwischen den beiden Kontaktträgern (6) eine am Gehäuse schwenkbar gelagerte Verriegelungswippe (36) angeordnet ist, die mit ihren beiden Enden jeweils in eine Ausnehmung (37, 38) der beiden Kontaktträger (6) eingreift.

## Claims

1. Electrical switching device with two contactors which have in each case at least four fixed contact elements (16-19; 20-23) and associated movable contact bridges (15) as well as terminal contacts (34), the fixed contact elements (16-23) of the two contactors being connected to one another in pairs by means of electroconductive connections, and the fixed contact elements being arranged in a casing (28), characterised in that the electroconductive connections are designed in each case integrally with the two associated fixed contact elements (16, 19; 17, 18; 20, 22; 21, 23) as, at least in the region of the contact elements, busbars (24-27) having a U cross-section, the fixed contact elements being arranged in each case at lower U-limbs while the upper U-limb represents the electroconductive connection of the contact elements connected to one another in pairs, and in that the casing (28) can be divided into two casing halves (29, 30) along a partition plane parallel to the longitudinal extension of the busbars (24-27), the busbars being arranged so as to be insertable into the casing halves from the partition plane, so that the two casing halves lie opposite one another in the assembled state.

2. Switching device according to Claim 1, characterised in that all fixed contact elements (16-23) of the busbars (24-27) are arranged together with the movable contact bridges (15) in a common casing (28).

3. Switching device according to Claim 1 or 2, characterised in that three partition walls (33) are arranged in each casing half (29; 30) to form four arcing chambers with a predetermined distance between one another, each arcing chamber being associated with one of the fixed contact elements (16-23).

4. Switching device according to one of Claims 1 to 3, characterised in that in a first casing half (29) a first busbar (24) connects the two outer arcing chambers and a second busbar connects the two inner arcing chambers to one another, while in the second casing half (30) the third and fourth busbar (25, 26) connects in each case an outer and an inner arcing chamber to one another.

5. Switching device according to one of Claims 1 to 4, characterised in that a separating bar (31) can be fitted on the assembled casing (28) between the busbars (24, 25; 26, 27) of the two casing halves (29, 30).

6. Switching device according to Claim 5, characterised in that at both ends of the separating bar (31) there is in each case a transverse bar (32), the ends of which can be positively connected to the casing halves (29, 30).

7. Switching device according to one of Claims 1 to 6, characterised in that two fixed contact elements (16, 23) are provided in each case on each busbar (24-27), the contact elements being arranged in each case at the ends of the busbars.

8. Switching device according to one of Claims 1 to 7, characterised in that on each busbar the upper U-limb extends over the entire length of the busbar (24; 25; 26; 27).

9. Switching device according to one of Claims 1 to 8, characterised in that on the busbars (24, 26, 27) a cutout is formed in the lower U-limb between the two fixed contact elements (16, 19; 20, 22; 21, 23).

10. Switching device according to one of Claims 1 to 9, characterised in that the distance between the upper and the lower U-limb at the respective ends of the third and fourth busbar (26, 27) is equal, and in that the distance between the upper and the lower U-limb at one end of the first and second busbar (24, 25) is greater than at their respective other end.

11. Switching device according to one of Claims 1 to 10, characterised in that a bore (34) for the terminal contact is arranged on the upper limb of each busbar (24-27).

12. Switching device according to Claim 11, characterised in that the bore (34) is connected to the edge of the busbar (24-27) via a cutout in the upper limb.

13. Switching device according to one of Claims 1 to 12, characterised in that the upper U-limb of the shorter second busbar (25) has a greater limb length in the direction transverse to the longitudinal axis of the busbars than the upper U-limb of the longer first busbar (24).

14. Switching device according to one of Claims 11 to 13, characterised in that there is formed in the casing below the bore (34) of the respective terminal contact a cutout, into which a terminal screw for fastening a cable lug can be inserted and prevented from turning.

15. Switching device according to one of Claims 1 to 14, characterised in that the busbar is designed as a stamped bending part.

16. Switching device according to one of Claims 1 to 15, characterised in that the contact bridges (15) are arranged in the casing in pairs in each case on two adjacent contact carriers (6) so as to be slidable in the direction of the partition walls (33).

17. Switching device according to Claim 16, 16, characterised in that there is arranged between the two contact carriers (6) a locking rocker (36) which is pivotally mounted on the casing and which engages with its two ends in each case into one cutout /37, 38) of the two contact carriers (6).

## Revendications

1. Dispositif de coupure de courant électrique avec deux contacteurs, qui comprennent respectivement au moins quatre éléments de contact fixes (16-19, 20-23) et des ponts de contact (15) mobiles qui en font partie ainsi que des contacts de raccordement (34), les éléments de contact fixes (16-23) des deux contacteurs étant reliés ensemble par paire au moyen de liaisons conductrices électriques, les éléments de contact fixes étant placés dans un boîtier (28), caractérisé :
- en ce que les liaisons conductrices électriques sont réalisées respectivement en une pièce avec les deux éléments de contact fixes correspondants (16, 19 ; 17, 18 ; 20, 22 ; 21, 23) comme barres conductrices (24, 27), de section en forme d'U au moins dans la zone des éléments de contact, les éléments de contact fixes étant placés respectivement sur des branches inférieures du U, alors que la branche supérieure du U représente la liaison conductrice électrique des éléments de contact connectés ensemble par paire, et
- en ce que le boîtier (28) peut être divisé en deux moitiés (29, 30) selon un plan de séparation (E) parallèle au développement longitudinal des barres de courant (24-27), les barres de courant étant placées enfichables dans les moitiés de boîtier à partir du plan de séparation, de sorte qu'à l'état monté les deux moitiés de boîtier se font face.

2. Dispositif de coupure de courant selon la revendication 1, caractérisé en ce que tous les éléments de contact fixes (16-23) des barres de courant (24-27) sont placés avec les ponts de contact (15) mobiles dans un boîtier commun (28).

3. Dispositif de coupure de courant selon la revendication 1 ou la revendication 2, caractérisé en ce que dans chaque moitié de boîtier (29, 30) sont placées trois parois de séparation (33) destinées à former 4 chambres de commutation avec un espace déterminé l'une par rapport à l'autre, chaque chambre de commutation étant associée à un des éléments de contact fixe (16-23).

4. Dispositif de coupure de courant selon l'une des revendications 1 à 3, caractérisé en ce que dans une première moitié de boîtier (29) une première barre de courant (24) unit les deux chambres de commutation extérieures et une deuxième barre de courant (25) unit les deux chambres de commutation intérieure, alors que dans la deuxième moitié de boitier (30) la troisième et la quatrième barre de courant (25, 26) unissent respectivement une chambre de commutation extérieure et une chambre de commutation intérieure.

5. Dispositif de coupure selon l'une des revendications 1 à 4, caractérisé en ce que sur le boîtier assemblé (28) on peut placer une entretoise de séparation (31) entre les barres de courant (24, 25; 26, 27) des deux moitiés de boîtier (29, 30).

6. Dispositif de coupure selon la revendication 5, caractérisé en ce qu'aux deux extrémités de l'entretoise de séparation (31) est réalisée respectivement une traverse (32) dont les extrémités sont susceptibles d'etre reliées par interpénétration par la forme aux moitiés de boîtier (29, 30).

7. Dispostif de coupure de courant selon l'une des revendications 1 à 5, caractérisé en ce que pour cheque barre de courant (24-27) sont prévus respectivement deux éléments de contact fixes (16-23), les éléments de contact étant disposés respectivement aux extrémités des barres de courant.

8. Dispositif de coupure de courant selon l'une des revendications 1 à 7, caractérisé en ce que pour chaque barre de courant la branche supérieure du U s'étend sur toute la longueur de la barre de courant (24 ; 25 ; 26 ; 27).

9. Dispositif de coupure de courant selon l' une des revendications 1 à 8, carfactérisé en ce que dans les barres de courant (24, 26, 27) dans la branche intérieure du U entre les deux éléments de contact fixes (16, 19 ; 20, 22 ; 21, 23) est réalisé un évidement.

10. Dispositif de coupure de courant selon l'une des revendications 1 à 9, caractérisé en ce que la distance entre la branche supérieure et la branche inférieure du U aux extrémités respectives de la troisième et de la quatrième barre de courant (26, 27) est la même, et en ce que la distance entre la branche supérieure et la branche intérieure du U à une extrémité de la première et de la deuxième barre de courant (24, 25) est plus grande qu'à leur autre extrémité respective.

11. Dispositif de coupure de courant selon l'une des revendications 1 à 10, caractérisé en ce que sur la branche supérieure de chacune des barres de courant (24-27), il existe un perçage (34) pour le contact de branchement.

12. Dispositif de coupure de courant selon la revendication 11, caractérisé en ce que le percage (34) est relié par un évidement dans la branche supérieure au bord de la barre de courant (24-27).

13. Dispositif de coupure de courant selon l'une des revendications 1 à 12, caractérisé en ce que la branche supérieure de U de la deuxième et plus courte barre de courant (25) comporte dans le sens transversal par rapport à l'axe longitudinal de la barre de courant une longueur de branche supérieure à celle de la branche supérieure de U de la première et plus longue barre de courant (24).

14. Dispositif de coupure de courant selon l'une des revendications 11 à 13, caractérisé en ce qu en-dessous du perçage (34) du contact de raccordement correspondant est réalisé dans le boîtier un évidement, dans lequel on peut faire entrer une vis de raccord pour fixer une cosse de cable et l' assurer contre un pivotement.

15. Dispositif de coupure de courant selon l une des revendications 1 à 14, caractérisé en ce que la barre de courant est réalisée en pièce pliée estampée.

16. Dispositif de coupure de courant selon l une des revendications 1 à 15, caractérisé en ce que les ponts de contact (15) sont placés par couple respectivement sur deux supports de contact se trouvant l un près de l'autre et sont mobiles dans le boîtier selon la direction des parois de séparation (33).

17. Dispositif de coupure de courant selon la revendication 16, caractérisé en ce qu'entre les deux supports de contact (6) est placée une bascule de verrouillage (36) logée pivotable dans le boitier et qui fait prise avec ses deux extrémités respectivement dans un évidement (37, 38) des deux supports de contact (6).
